# FASCICULE DE BREVET EUROPEEN

(11) **EP 1 685 573 B1**
(45) Date de publication et mention de la délivrance du brevet: **31.10.2012**
(21) Numéro de dépôt: 04805837.4
(22) Date de dépôt: 17.11.2004
(51) Int. Cl.: G21C 19/46, C01G 43/00, G21F 9/06

(54) **PROCEDE DE SEPARATION DE L' URANIUM (VI) D'ACTINIDES (IV) ET/OU (VI) ET SES UTILISATIONS**
VERFAHREN ZUM TRENNEN VON URAN (VI) VON AKTINIDEN (IV) UND/ODER (VI) UND VERWENDUNG DAFÜR
METHOD FOR SEPARATING URANIUM (VI) FROM ACTINIDES (IV) AND/OR (VI) AND THE USE THEREOF

(30) Priorité: 20.11.2003 FR 0350866
(43) Date de publication de la demande: 02.08.2006
(73) Titulaire: Commissariat à l'Énergie Atomique et aux Énergies Alternatives, 75015 Paris (FR); AREVA NC, 75009 Paris (FR)
(72) Inventeur: DINH, Binh, F-30130 Pont Saint Esprit (FR); LECOMTE, Michael, F-84000 Avignon (FR); BARON, Pascal, F-30200 Bagnol sur Ceze (FR); SOREL, Christian, F-30400 Villeneuve-les-Avignon (FR); BERNIER, Gilles, F-84000 Avignon (FR)
(74) Mandataire: Poulin, Gérard
(86) Numéro de dépôt international: PCT/FR2004/050594
(87) Numéro de publication internationale: WO 2005/052950

(56) Documents cités:
- FR-A- 2 731 717
- US-A- 4 196 136
- US-A- 4 787 979

## Description

### DOMAINE TECHNIQUE

La présente invention a pour objet un procédé permettant de séparer de l'uranium (VI) d'un ou plusieurs actinides(IV) et/ou (VI), et notamment du thorium(IV), de l'uranium(IV), du plutonium(IV), du neptunium(IV), du plutonium (VI) et du neptunium(VI), ainsi qu'aux utilisations de ce procédé.

Ce procédé est notamment susceptible d'être utilisé dans le cadre d'un procédé de retraitement des combustibles nucléaires irradiés, en particulier dans le cadre du premier cycle de purification du procédé PUREX pour décontaminer l'uranium en neptunium, en plutonium et/ou en thorium.

Il peut aussi être utilisé dans le cadre d'un procédé de traitement de minerais de terres rares, de thorium et/ou d'uranium.

### ETAT DE LA TECHNIQUE ANTERIEURE

Toutes les usines de retraitement des combustibles nucléaires irradiés utilisent à ce jour le procédé PUREX (**P**lutonium **U**ranium **R**efining by **EX**traction) pour récupérer l'uranium et le plutonium présents dans ces combustibles.

Ceci est obtenu par la mise en oeuvre de plusieurs cycles de purification.

Le premier cycle de purification vise à décontaminer conjointement l'uranium et le plutonium en produits de fission ainsi qu'à réaliser une partition de ces deux éléments en deux flux.

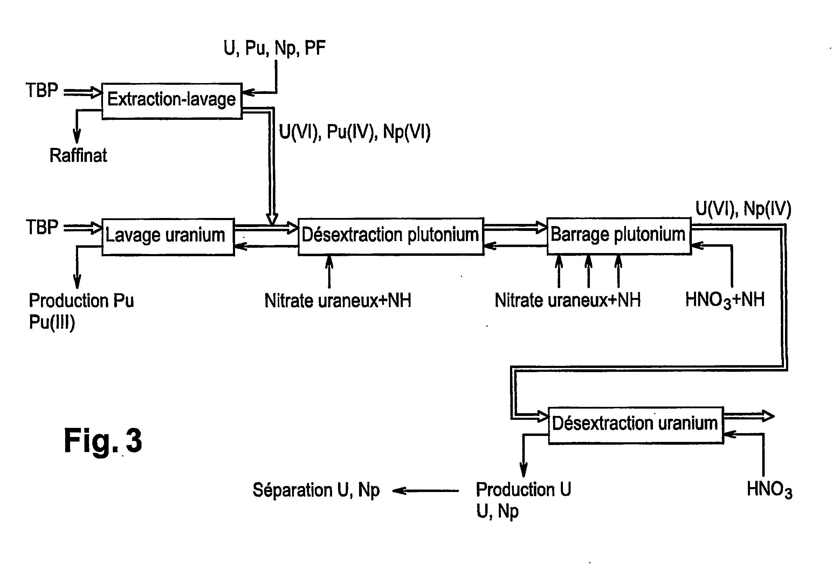

Ce cycle, tel qu'il est mis en oeuvre dans les usines européennes de retraitement des combustibles nucléaires irradiés, est représenté, sous une forme schématique, sur la Figure 3.

Comme le montre cette figure, dans une première zone dite "*extraction-lavage*", l'uranium et le plutonium sont co-extraits, le premier à l'état d'oxydation (VI), le second à l'état d'oxydation (IV), de la solution aqueuse dans laquelle ils se trouvent (et qui résulte de la dissolution en milieu aqueux d'un combustible irradié), au moyen d'une phase solvant constituée de tributyle phosphate (TBP - extractant) à 30% en volume dans du tétrapropylène hydrogéné (TPH - diluant). Cette phase solvant subit ensuite un lavage par une solution aqueuse acide pour parfaire la décontamination de l'uranium et du plutonium en produits de fission. La phase aqueuse effluente de cette zone, dénommée "*raffinat d'extraction*", contient les produits de fission non extraits par la phase solvant et est éliminée du cycle.

La phase solvant chargée en uranium et en plutonium est alors dirigée vers une zone dite "*désextraction plutonium*," au niveau de laquelle le plutonium subit une désextraction réductrice sélective. Cette désextraction est réalisée en réduisant le plutonium de l'état d'oxydation (IV), extractible par le solvant, à l'état d'oxydation (III) beaucoup moins extractible, ce qui permet son passage dans une phase aqueuse, tandis que l'uranium reste dans la phase solvant.

La phase aqueuse sortant de cette zone et contenant le plutonium désextrait est dirigée vers une zone dite "*lavage uranium*" au niveau de laquelle elle est mise en contact avec une phase solvant non chargée destinée à extraire l'uranium présent dans cette phase aqueuse. La phase solvant sortant de cette zone est alors dirigée vers la zone "*désextraction plutonium*".

La phase solvant sortant de la zone "*désextraction plutonium*" est, elle, dirigée vers une zone dite *"barrage plutonium"* au niveau de laquelle elle est lavée par une solution aqueuse pour désextraire le plutonium encore présent dans cette phase solvant. La phase aqueuse sortant de cette zone est dirigée vers la zone "*désextraction plutonium*".

L'agent réducteur utilisé dans la désextraction réductrice du plutonium et le "*barrage plutonium*" est le nitrate uraneux que l'on associe à un agent anti-nitreux, en l'espèce le nitrate d'hydrazinium.

La phase solvant sortant du "*barrage plutonium*" est, à son tour, dirigée vers une zone dite "*désextraction uranium*" au niveau de laquelle l'uranium est désextrait par une phase aqueuse faiblement acide, l'ensemble de l'opération se déroulant à 50°C.

Dans le premier cycle de purification représenté sur la figure 3, le neptunium est extrait, principalement sous forme de neptunium(VI), dans la zone "*extraction-lavage*" conjointement avec l'uranium et le plutonium. Puis, lors de la désextraction sélective du plutonium, le neptunium est réduit à l'état d'oxydation (IV) extractible par le solvant et suit ainsi le flux uranium. On parle donc de "*récupération conjointe de l'uranium et du neptunium*".

On obtient donc au cours de ce premier cycle de purification trois flux aqueux : un premier flux qui contient certains actinides mineurs et les autres produits de fission, un deuxième flux aqueux qui contient l'uranium et le neptunium, et un flux aqueux contenant le plutonium.

Après une opération de concentration, le flux uranium est traité dans un second cycle de purification.

Quant au flux plutonium, il subit un ou deux autres cycles successifs de purification afin de parfaire la décontamination en émetteurs βγ, et de concentrer ce flux.

Dans la perspective de réalisation de nouvelles usines de retraitement de combustibles nucléaires irradiés, il serait souhaitable de parvenir à simplifier le procédé PUREX, de manière à optimiser à la fois les coûts d'investissement, d'exploitation et de maintenance de telles usines, sans affecter toutefois les performances de ce procédé en matière de rendement et de qualité de retraitement.

En effet, l'économie ne serait-ce que d'un seul cycle d'extraction permettrait de diminuer, non seulement le nombre des appareillages et des équipements nécessaires à la mise en oeuvre du procédé, mais également le volume des réactifs consommés, le volume des effluents à traiter, la durée du procédé et, par voie de conséquence, de réduire la taille des usines, leurs coûts de construction et leurs coûts de fonctionnement.

L'expérience montre qu'à l'issue du premier cycle de purification, l'uranium est suffisamment décontaminé en émetteurs βγ et que le principal intérêt du deuxième cycle de purification de l'uranium est de le séparer du neptunium et, éventuellement, du thorium ayant suivi le flux uranium.

Les Inventeurs se sont donc fixé pour objectif de fournir un procédé qui permette de séparer très efficacement l'uranium(VI) d'actinides se trouvant à l'état d'oxydation (IV) et/ou (VI), et en particulier du neptunium, et qui puisse s'intégrer dans le premier cycle de purification du procédé PUREX de manière à autoriser la suppression du deuxième cycle de purification de l'uranium.

Pour résoudre un tout autre problème, à savoir l'extraction sélective de l'américium(III) d'une solution aqueuse nitrique contenant entre autres du curium(III), il a été proposé dans FR-A-2 731 717 [1], aux noms conjoints des Demanderesses, d'oxyder de manière sélective (par rapport au curium) l'américium(III) en américium(VI) par voie électrochimique, puis d'extraire l'américium(VI) de ladite solution par mise en contact de cette dernière avec une phase organique contenant un extractant approprié tel que le tributyle phosphate ou un acide dialkyl-phosphorique.

Dans ce procédé, qui est connu sous le nom de SESAME, l'oxydation de l'américium(III) est obtenue en ajoutant à la solution aqueuse dans laquelle il se trouve, d'une part, un hétéropolyanion lacunaire, notamment le phosphotungstate de potassium, et, d'autre part, un ion Ag(II) capable d'oxyder l'américium(III) en américium(VI) en étant réduit en Ag(I), et en soumettant ladite solution à une électrolyse dans des conditions telles que l'on régénère électrochimiquement l'ion Ag(II) à partir de l'ion Ag(I) produit par l'oxydation de l'américium.

Ainsi, dans ce cas, l'hétéropolyanion lacunaire contribue, de par sa forte aptitude à complexer les actinides(IV), à stabiliser l'américium(IV) et à permettre son oxydation en américium(V), puis en américium(VI), sous l'action de l'oxydant électrogénéré qu'est l'argent(II).

### EXPOSÉ DE L'INVENTION

Les Inventeurs ont atteint l'objectif qu'ils s'étaient fixé par la présente invention qui a pour objet un procédé de séparation de l'uranium(VI) d'un ou plusieurs actinides choisis parmi les actinides (IV) et les actinides (VI) autres que l'uranium(VI), caractérisé en ce qu'il comprend les étapes suivantes :
a) mettre en contact une phase organique, non miscible à l'eau et contenant ledit uranium et le ou lesdits actinides, avec une solution aqueuse contenant au moins un hétéropolyanion lacunaire et, si ledit actinide ou l'un au moins desdits actinides est un actinide(VI), un agent réducteur capable de réduire sélectivement cet actinide(VI) ; et
b) séparer ladite phase organique de ladite solution aqueuse.

Le procédé selon l'invention utilise l'aptitude remarquable que possèdent les hétéropolyanions lacunaires à complexer sélectivement les actinides(IV) en milieu aqueux acide et, partant, à provoquer leur transfert d'une phase organique à une phase aqueuse acide.

Ainsi :
- soit l'actinide ou les actinides que l'on veut séparer de l'uranium(VI) se trouvent tous à l'état d'oxydation (IV) dans la phase organique, auquel cas leur séparation de l'uranium(VI) est obtenue en mettant en contact cette phase organique avec une solution aqueuse acide contenant au moins un hétéropolyanion lacunaire, lequel, en les complexant, permet leur transfert dans cette solution aqueuse ;
- soit l'actinide ou l'un au moins des actinides que l'on souhaite séparer de l'uranium(VI) se trouve au degré d'oxydation (VI) dans la phase organique, auquel cas sa séparation de l'uranium(VI) est obtenue en mettant en contact cette phase organique avec une solution aqueuse contenant, outre au moins un hétéropolyanion lacunaire, un agent réducteur apte à amener cet actinide(VI) à un état d'oxydation s'opposant à son maintien dans ladite phase organique, sans pour autant réduire l'uranium(VI).

En effet, selon l'agent réducteur utilisé, ledit actinide peut être réduit soit en actinide(III) qui, de par son absence d'affinité pour la phase organique, n'est pas retenu par cette dernière ; soit en actinide(IV) qui, en étant complexé par l'hétéropolyanion lacunaire présent dans la solution aqueuse acide, n'est pas non plus retenu par la phase organique ; soit encore, s'il s'agit du neptunium, à l'état d'oxydation (V). Le passage et le maintien du neptunium dans la solution aqueuse acide sont alors obtenus par deux effets conjugués : d'une part, la faible affinité du neptunium(V) vis-à-vis de la phase organique, et, d'autre part, la tendance que présente cet élément, lorsqu'il se trouve à l'état d'oxydation (V), à dismuter spontanément en neptunium(IV) et en neptunium(VI), tendance que favorise la présence de l'hétéropolyanion lacunaire dans la solution aqueuse acide, de par son fort pouvoir complexant des actinides(IV). Le neptunium(IV) issu de la dismutation du neptunium(V) est complexé par l'hétéropolyanion lacunaire de la solution aqueuse acide, tandis que le neptunium(VI) produit par cette dismutation est à son tour réduit en neptunium(V) qui va de nouveau dismuter en neptunium(IV) et (VI), et ainsi de suite. La totalité du neptunium(VI) initialement présent dans la phase organique se retrouve ainsi à l'état d'oxydation (IV), complexé par l'hétéropolyanion lacunaire dans la solution aqueuse acide.

Les hétéropolyanions sont des assemblages d'ions oxo, obtenus par condensation d'ions oxométalliques de formule MO₄ⁿ⁻ dans laquelle M représente un métal choisi parmi le technétium (Tc), le vanadium (V), le niobium (Nb), le tantale (Ta), le chrome (Cr), le molybdène (Mo) et le tungstène (W), autour d'un ion oxo de formule XO₄⁻ dans laquelle X est un hétéroatome, généralement du bore (B), du silicium (Si), du germanium (Ge), du vanadium (Va), du phosphore (P), de l'arsenic (As) ou du bismuth (Bi).

Ces hétéropolyanions sont dits "*lacunaires*" lorsqu'ils possèdent dans leur structure une ou plusieurs lacunes obtenues par élimination d'un groupement MO₄ⁿ⁻.

Dans le cadre de la présente invention, le ou les hétéropolyanions lacunaires sont, de préférence, choisis parmi les hétérotungstates de formule P₂W₁₇O₆₁¹⁰⁻, As₂W₁₇O₆₁¹⁰⁻, SiW₁₁O₃₉⁸⁻, GeW₁₁O₃₉⁸⁻ et PW₁₁O₃₉⁷⁻, ces derniers s'étant, en effet, révélés être les plus stables et former les complexes les plus forts avec les actinides(IV) quelle que soit l'acidité de la solution aqueuse.

Ces hétérotungstates lacunaires sont avantageusement utilisés sous la forme de sels de métaux alcalins, par exemple de sels de potassium, de sodium ou de lithium.

De préférence, la solution aqueuse acide contient un silicotungstate de formule SiW₁₁O₃₉⁸⁻, en particulier un silicotungstate de potassium, en raison des performances supérieures, tant en termes de stabilité en milieu acide que de complexation des actinides(IV), des silicotungstates. De plus, dans l'hypothèse où la solution aqueuse récupérée à l'issue de l'étape b) est destinée à être vitrifiée, les silicotungstates présentent l'avantage, par rapport aux hétérotungstates du type P₂W₁₇O₆₁¹⁰⁻ ou As₂W₁₇O₆₁¹⁰⁻, de faciliter cette vitrification de par la présence d'un seul atome de silicium et d'un nombre plus faible d'atomes de tungstène.

La concentration de la solution aqueuse acide en hétéropolyanion (s) lacunaire(s) est choisie en fonction de la teneur de la phase organique en actinide(s) devant être séparés de l'uranium (VI) et du rapport volumique entre la phase organique et la solution aqueuse acide mises en contact à l'étape a).

De préférence, cette concentration est telle que le rapport molaire entre le ou les hétéropolyanions lacunaires présents dans la phase aqueuse acide et le ou les actinides devant être séparés de l'uranium(VI) est de 2 à 10 et, mieux encore, de 2 à 5, pour un rapport volumique phase organique/solution aqueuse généralement de 5 à 10.

Si des ions métalliques autres que des actinides sont également présents dans la phase organique et si ces ions sont susceptibles d'être complexés par le ou les hétéropolyanions lacunaires, alors la concentration en hétéropolyanion(s) lacunaire(s) de la solution aqueuse acide doit être augmentée en conséquence.

La solution aqueuse acide est, de préférence, une solution d'acide nitrique, de concentration en HNO₃ généralement comprise entre 0,5 et 3 moles/L selon le ou les actinides devant être séparés de l'uranium(VI). Ainsi, par exemple, on préfère qu'elle soit de l'ordre de 1 mole/L dans le cas du thorium(IV), de l'uranium(IV), du plutonium(IV), du plutonium(VI) et du neptunium(IV), et de l'ordre de 2 à 3 moles/L dans le cas du neptunium(VI).

Lorsque la solution aqueuse acide contient un agent réducteur, celui-ci est choisi selon le degré d'oxydation auquel on souhaite amener le ou les actinides (VI) devant être séparés de l'uranium (VI).

Ainsi, la réduction de ce ou ces actinides (VI) en actinides (III) ou (IV) peut être obtenue par l'utilisation d'un agent réducteur relativement énergique comme le nitrate uraneux, tandis que, pour réduire le neptunium(VI) en neptunium(V), on utilise un agent réducteur plus doux comme, par exemple, le nitrate d'hydroxylamine.

Pour éviter les phénomènes de ré-oxydation parasites, cet agent réducteur est avantageusement utilisé conjointement avec un agent anti-nitreux (classiquement dénommé "*nitrous scavenger*" dans la littérature anglo-saxonne), c'est-à-dire un composé apte à détruire l'acide nitreux en réagissant avec lui.

Conformément à l'invention, cet agent anti-nitreux est, de préférence, l'hydrazine qui détruit l'acide nitreux par les réactions suivantes :

N₂H₄ + HNO₂ → HN₃ + 2H₂O

HN₃ + HNO₂→ N₂ + N₂O + H₂O

Par ailleurs, dans le cas d'une réduction du neptunium(VI) en neptunium(V), l'étape a) est, de préférence, réalisée à chaud, c'est-à-dire en pratique à une température de 45 à 60°C, pour accélérer la réduction du neptunium(VI) et la dismutation du neptunium (V) en neptunium(IV) et neptunium (VI).

Conformément à l'invention, la phase organique peut comprendre soit un solvant au sens classique du terme, organique, non-miscible à l'eau et présentant une forte affinité vis-à-vis de l'uranium (VI) et du ou des actinides dont on veut le séparer, soit un solvant au sens où ce terme est employé dans l'hydrométallurgie, c'est-à-dire un mélange d'un extractant de l'uranium(VI) et du ou des actinides dont on veut le séparer et d'un diluant non miscible à l'eau et chimiquement inerte.

Pour parfaire la séparation de l'uranium(VI) du ou des actinides (IV) et/ou (VI), le procédé selon l'invention comprend, de plus, une opération de lavage de la solution aqueuse obtenue à l'issue de l'étape b) par une phase organique présentant une affinité vis-à-vis de l'uranium(VI), une telle opération permettant, en effet, de récupérer la fraction d'uranium(VI) susceptible d'avoir été désextrait au cours de l'étape a) du procédé.

Pour ce lavage, on met en contact la solution aqueuse obtenue à l'issue de l'étape b) avec la phase organique affine vis-à-vis de l'uranium(VI), puis on sépare ladite solution aqueuse de ladite phase organique.

Cette phase organique peut être constituée soit d'un solvant organique, non-miscible à l'eau et présentant une forte affinité vis-à-vis de l'uranium (VI), soit d'un extractant de l'uranium(VI) en mélange avec un diluant non miscible à l'eau et chimiquement inerte.

Le procédé selon l'invention est très avantageux car il permet de séparer très efficacement l'uranium(VI) d'actinides(IV) et/ou (VI) tels que le thorium(IV), l'uranium(IV), le plutonium(IV), le neptunium(IV), le plutonium(VI) et le neptunium(VI), tout en étant simple à mettre en oeuvre puisqu'il met en jeu des opérations d'extraction liquide-liquide.

A cet égard, il peut être mis en oeuvre dans tous les appareillages classiquement utilisés pour réaliser des extractions liquide-liquide.

En particulier, il peut être utilisé pour séparer en continu de l'uranium(VI) d'un ou plusieurs actinides choisis parmi les actinides (IV) et (VI) autres que l'uranium dans des contacteurs multi-étagés tels que ceux employés dans les procédés de retraitement des combustibles irradiés.

L'invention a, donc, aussi pour objet l'utilisation d'un procédé tel que décrit ci-dessus dans le cadre d'un procédé de retraitement de combustibles nucléaires irradiés.

En particulier, l'invention a pour objet l'utilisation d'un procédé tel que décrit ci-dessus dans le cadre du premier cycle de purification du procédé PUREX.

Dans le cas où ce premier cycle de purification est un cycle avec récupération conjointe de l'uranium et du neptunium, alors le procédé selon l'invention peut notamment être mis en oeuvre soit après l'opération "*barrage plutonium*" pour décontaminer l'uranium présent dans la phase solvant issue de cette opération en neptunium, soit après l'opération *"désextraction plutonium"* pour décontaminer l'uranium présent dans la phase solvant issue de cette opération en neptunium et, éventuellement, en plutonium au cas où cette phase contiendrait encore du plutonium.

Auquel cas, la phase solvant issue de l'opération *"barrage plutonium"* est, de préférence, soumise à une opération d'oxydation, par exemple par des vapeurs nitriques, pour oxyder l'excès d'uranium(IV) qu'elle renferme en uranium (VI) avant d'être soumise à l'étape a) du procédé selon l'invention et ce, pour éviter l'utilisation d'une quantité trop importante d'hétéropolyanion(s) lacunaire(s) au cours de l'étape a) du procédé selon l'invention.

L'uranium, le neptunium et, le cas échéant, le plutonium se trouvant alors dans la phase solvant à l'état d'oxydation (VI), l'étape a) du procédé selon l'invention est mise en oeuvre en utilisant une solution aqueuse nitrique de molarité allant de 2 à 3 et contenant au moins un hétéropolyanion lacunaire, du nitrate d'hydroxylamine et de l'hydrazine, à une température de l'ordre de 45°C.

Dans le cas où le premier cycle de purification du procédé PUREX est un cycle avec récupération conjointe du plutonium et du neptunium, alors le procédé selon l'invention peut notamment être mis en oeuvre après l'opération "*désextraction plutonium"* pour décontaminer l'uranium présent dans la phase solvant issue de cette opération en neptunium et/ou en plutonium pour le cas où cette phase contiendrait encore ces deux éléments.

Dans ce cas, l'étape a) du procédé selon l'invention peut être mise en oeuvre sans opération d'oxydation préalable.

Par ailleurs, le neptunium et le plutonium se trouvant normalement à l'état d'oxydation (IV) dans la phase solvant issue de l'opération "*désextraction plutonium",* l'étape a) du procédé selon l'invention peut être mise en oeuvre en utilisant une solution aqueuse nitrique de molarité proche de 1 et contenant au moins un hétéropolyanion lacunaire, à température ambiante. Toutefois, il est également possible de la mettre en oeuvre en utilisant une solution aqueuse acide de molarité allant de 2 à 3 et contenant au moins un hétéropolyanion lacunaire, du nitrate d'hydroxylamine et de l'hydrazine, à une température de l'ordre de 45°C, pour pallier un éventuel dysfonctionnement de l'opération *"désextraction plutonium"* susceptible de s'être traduit par une réduction incomplète (ou une ré-oxydation) du neptunium et du plutonium.

Au vu des facteurs de décontamination de l'uranium(VI) obtenus expérimentalement par les Inventeurs en mettant en oeuvre le procédé selon l'invention, l'intégration de ce procédé dans le premier cycle de purification du procédé PUREX apparaît rendre inutile le deuxième cycle de purification de l'uranium et, dans le cas où il est utilisé après l'opération *"désextraction plutonium",* permettre la suppression du *"barrage plutonium".*

Il en résulte une simplification considérable du procédé PUREX.

D'autres caractéristiques et avantages de l'invention apparaîtront mieux à la lecture du complément de description qui suit, qui est donnée bien entendu à titre illustratif et non-limitatif, et en référence aux dessins annexés.

### BRÈVE DESCRIPTION DES DESSINS

La figure 1 représente schématiquement un premier exemple de mise en oeuvre du procédé selon l'invention pour séparer en continu l'uranium(VI) d'actinides(IV) présents dans un même flux organique.
La figure 2 représente schématiquement un deuxième exemple de mise en oeuvre du procédé selon l'invention pour séparer en continu l'uranium(VI) du neptunium(VI) présents dans un même flux organique.
La figure 3 représente un schéma de principe du premier cycle de purification du procédé PUREX tel qu'il est mis en oeuvre dans les usines européennes de retraitement des combustibles nucléaires irradiés.
La figure 4 représente un schéma de principe d'un exemple d'intégration du procédé selon l'invention dans le premier cycle de purification du procédé PUREX illustré sur la figure 3.
La figure 5 représente un schéma de principe d'un deuxième exemple d'intégration du procédé selon l'invention dans le premier cycle de purification du procédé PUREX illustré sur la figure 3.
La figure 6 représente un schéma de principe d'une variante du premier cycle de purification du procédé PUREX, dans laquelle le neptunium est récupéré conjointement avec le plutonium.
La figure 7 représente un schéma de principe d'un exemple d'intégration du procédé selon l'invention dans la variante du premier cycle de purification du procédé PUREX illustrée sur la figure 6.

### EXPOSÉ DÉTAILLÉ DE MODES DE MISE EN OEUVRE

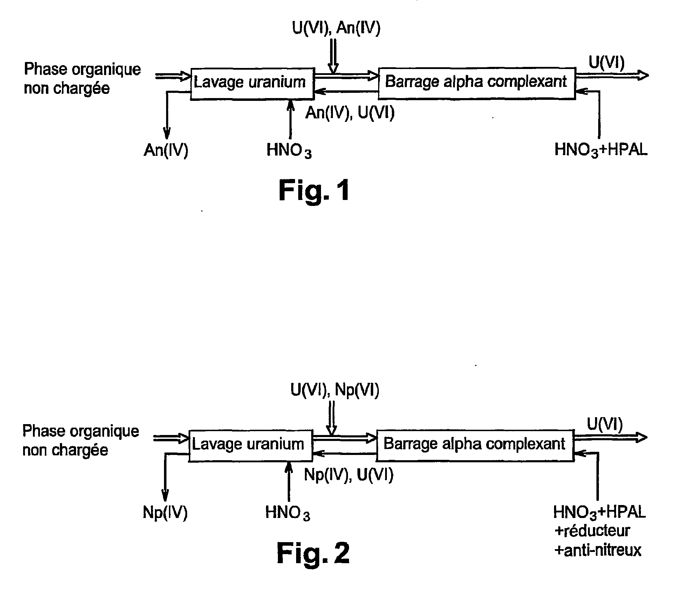

On se réfère tout d'abord à la figure 1 qui représente, sous une forme schématique, un premier exemple de mise en oeuvre du procédé selon l'invention pour séparer l'uranium (VI) d'actinides(IV) présents dans un même flux organique comprenant, par exemple, outre ces éléments, un extractant de l'uranium(VI) et des actinides (IV) dans un diluant.

Dans cet exemple, le procédé selon l'invention est mis en oeuvre de façon continue dans deux contacteurs à contre-courant multi-étagés.

Ainsi, comme visible sur la figure 1, le flux organique chargé en uranium(VI) et en actinides (IV) est amené à un premier contacteur, dénommé "*barrage alpha complexant*" sur la figure 1, au niveau duquel il est mis en contact avec une solution aqueuse acide, par exemple une solution nitrique de molarité proche de 1, et contenant un hétéropolyanion lacunaire (HPAL), avantageusement un silicotungstate.

Le flux organique et la solution aqueuse acide sont, de préférence, mis en en contact dans un rapport de 5 à 10 pour limiter les volumes des effluents.

La phase organique sortant du premier contacteur contient l'essentiel de l'uranium(VI), tandis que la phase aqueuse sortant de ce contacteur contient les actinides(IV) complexés par l'HPAL, ainsi qu'une fraction d'uranium(VI) ayant été désextrait conjointement avec ces actinides.

Cette phase aqueuse est dirigée vers un deuxième contacteur, dénommé "*lavage uranium*" sur la figure 1, au niveau duquel son acidité est ramenée entre 1M et 2M par addition d'acide nitrique et elle est mise en contact avec une phase organique non chargée, par exemple une phase constituée du même extractant et du même diluant que ceux présents dans le flux organique arrivant au premier contacteur. Ce lavage permet de récupérer dans ladite phase organique la fraction d'uranium(VI) ayant été désextrait au cours de l'opération précédente.

La phase organique sortant du deuxième contacteur, chargée en uranium(VI), est dirigée vers l'entrée du premier contacteur, tandis que la phase aqueuse sortant du deuxième contacteur, qui ne contient plus que les actinides(IV) complexés par l'HPAL, est, elle, éliminée du circuit.

La figure 2 représente schématiquement un deuxième exemple de mise en oeuvre du procédé selon l'invention qui vise, lui, à séparer l'uranium(VI) du neptunium(VI) présents dans un même flux organique.

Là également, ce flux organique peut comprendre, outre l'uranium(VI) et le neptunium(VI), un extractant dans un diluant.

Dans cet exemple, le procédé est aussi mis en oeuvre de façon continue dans deux contacteurs à contre-courant multi-étagés.

Comme visible sur la figure 2, le flux organique chargé en uranium(VI) et en neptunium(VI) est amené à un premier contacteur, dénommé "*barrage alpha complexant*" sur la figure 2, au niveau duquel il est mis en contact avec une solution aqueuse acide, par exemple une solution nitrique de molarité allant de 2 à 3, et contenant un hétéropolyanion lacunaire (HPAL), avantageusement un silicotungstate, un agent réducteur relativement peu énergique comme le nitrate d'hydroxylamine, et un agent anti-nitreux, par exemple de l'hydrazine.

Cette mise en contact est avantageusement réalisée dans un rapport volumique phase organique/solution aqueuse nitrique de 5 à 10, et à une température de 45°C afin d'obtenir une cinétique d'oxydoréduction du neptunium suffisamment rapide.

La phase organique sortant du premier contacteur contient l'essentiel de l'uranium(VI), tandis que la phase aqueuse sortant de ce contacteur contient le neptunium(IV) complexé par l'HPAL, ainsi qu'une fraction d'uranium(VI) ayant été désextrait conjointement avec le neptunium.

Comme dans l'exemple précédent, cette phase aqueuse est dirigée vers un deuxième contacteur, dénommé "*lavage uranium*" sur la figure 2, au niveau duquel elle est mise en contact avec une phase organique non chargée, puis séparée de cette phase de sorte à récupérer dans cette dernière la fraction d'uranium(VI) ayant été désextrait au cours de l'opération précédente.

La phase organique sortant du deuxième contacteur, chargée en uranium(VI), est dirigée vers l'entrée du premier contacteur, tandis que la phase aqueuse sortant du deuxième contacteur, chargée en neptunium(IV) complexé par l'HPAL, est, elle, éliminée du circuit.

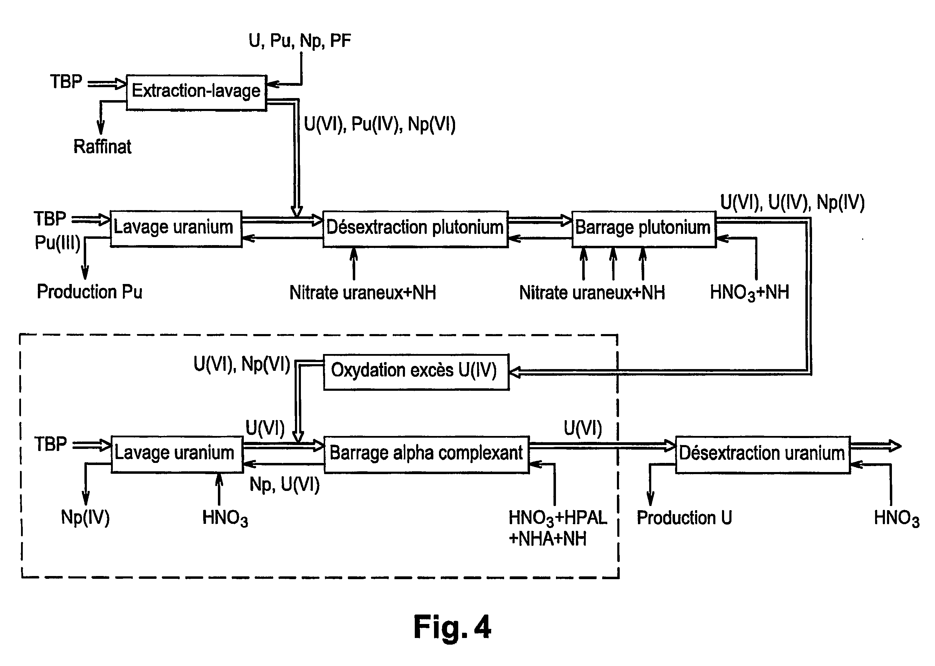

On se réfère à présent à la figure 4 qui représente schématiquement un exemple d'intégration du procédé selon l'invention dans le premier cycle de purification du procédé PUREX tel qu'il est mis en oeuvre dans les usines européennes de retraitement des combustibles nucléaires irradiés, ce cycle étant, lui, schématisé sur la figure 3.

Pour les rendre plus visibles, les étapes additionnelles que comporte la figure 4 par rapport à la figure 3 sont inscrites dans un cadre en pointillé.

Pour mémoire, le premier cycle de purification montré sur la figure 3 est un cycle dans lequel le neptunium est récupéré conjointement avec l'uranium.

En effet, le neptunium contenu dans la solution aqueuse issue de la dissolution du combustible irradié, est extrait, principalement sous forme de neptunium(VI), dans la zone "*extraction-lavage*" conjointement avec l'uranium et le plutonium, le premier étant à l'état d'oxydation (VI), tandis que le second est à l'état d'oxydation (IV).

Puis, ce neptunium(VI) est réduit en neptunium(IV), extractible par la phase solvant, lors de l'étape de désextraction sélective du plutonium. Il reste donc, au cours de cette étape, dans la phase solvant, avec l'uranium, tandis que le plutonium passe dans une phase aqueuse.

Aussi, dans l'exemple illustré sur la figure 4, le procédé selon l'invention est-il utilisé entre la zone "*barrage plutonium*" et la zone "*désextraction uranium*" pour décontaminer l'uranium présent dans la phase solvant sortant du "*barrage plutonium*" en neptunium.

Cette phase solvant contient de l'uranium(VI), un excès d'uranium(IV) (correspondant au nitrate uraneux utilisé comme réducteur pour la désextraction sélective du plutonium) et du neptunium(VI) en quantité minoritaire.

La complexation de cet excès d'uranium(IV) par un hétéropolyanion lacunaire étant susceptible de requérir une quantité très élevée d'hétéropolyanion lacunaire, il est souhaitable de l'oxyder en uranium(VI) avant que la phase solvant ne soit traitée par le procédé selon l'invention.

L'uranium et le neptunium se retrouvant ainsi à l'état d'oxydation(VI) dans cette phase, le procédé selon l'invention peut alors être mis en oeuvre selon un schéma analogue à celui montré sur la figure 2 avec :
■ la mise en contact, dans un premier contacteur, dénommé "*barrage alpha complexant*" sur la figure 4, de la phase solvant avec une solution aqueuse nitrique contenant un hétéropolyanion lacunaire (HPAL), du nitrate d'hydroxylamine (NHA) et de l'hydrazine (NH), à une température de l'ordre de 45°C, puis
■ le lavage, dans un deuxième contacteur, dénommé "*lavage uranium*" sur la figure 4, de la phase aqueuse sortant du premier contacteur par une phase solvant constituée de tributyle phosphate (TBP) à 30% dans du tétrapropylène hydrogéné (TPH), afin de récupérer la fraction d'uranium(VI) ayant été désextrait au cours de l'opération précédente.

La phase aqueuse sortant du deuxième contacteur, qui est chargée en neptunium(IV) complexé par l'HPAL, est éliminée du cycle et envoyée vers une unité de vitrification.

La phase organique sortant du deuxième contacteur, chargée en uranium(VI), est dirigée vers le premier contacteur, tandis que la phase organique sortant du premier contacteur, chargée en uranium(VI), est dirigée vers la zone "*désextraction uranium*" au niveau de laquelle l'uranium(VI) va être désextrait comme il l'est habituellement dans le premier cycle de purification du procédé PUREX illustré sur la figure 3.

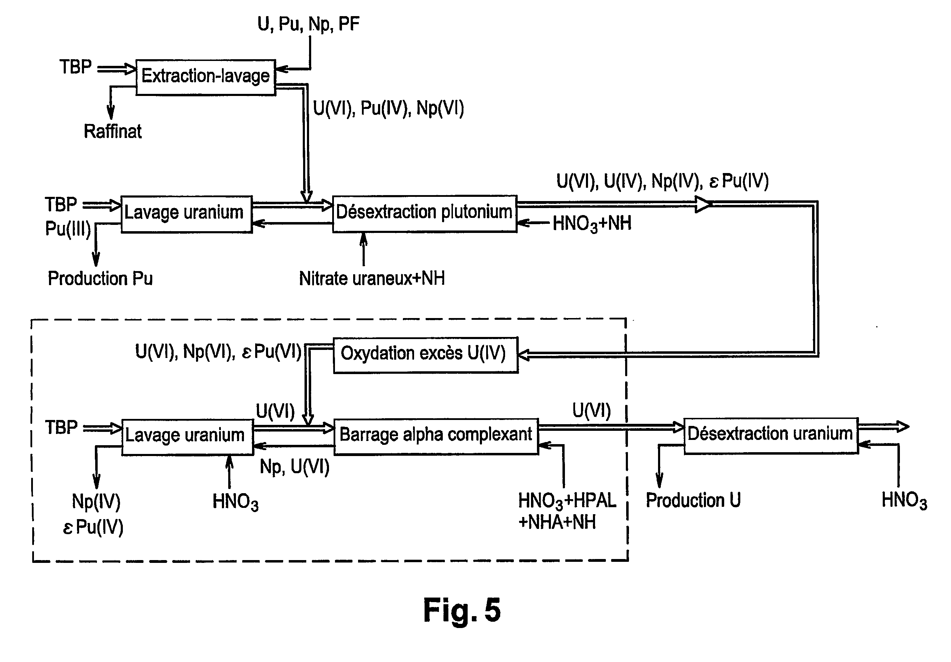

La figure 5 représente schématiquement un deuxième exemple d'intégration du procédé selon l'invention dans le premier cycle de purification du procédé PUREX illustré sur la figure 3. Là également, les étapes additionnelles que comporte la figure 5 par rapport à la figure 3 sont inscrites dans un cadre en pointillé.

Dans cet exemple, le procédé selon l'invention est mis en oeuvre juste après la zone "*désextraction plutonium*" pour décontaminer l'uranium présent dans la phase solvant sortant de cette zone en neptunium et, éventuellement, en plutonium s'il s'avère qu'elle contient encore du plutonium.

Cette phase solvant renferme de l'uranium (VI), un excès d'uranium(IV), du neptunium(IV) et, le cas échéant, du plutonium(IV).

Comme précédemment, cet excès d'uranium(IV) est oxydé en uranium(VI), par exemple par des vapeurs nitriques, puis le procédé selon l'invention est mis en oeuvre comme décrit en relation avec la figure 4 dans deux contacteurs multi-étagés, respectivement dénommés "*barrage alpha complexant*" et "*lavage uranium*" sur la figure 5.

La phase aqueuse sortant du deuxième contacteur, qui est chargée en neptunium(IV) et, éventuellement, en plutonium complexés par l'hétéropolyanion lacunaire, est éliminée du cycle et envoyée vers une unité de vitrification.

La phase organique sortant du deuxième contacteur, chargée en uranium(VI), est dirigée vers le premier contacteur, tandis que la phase organique sortant du premier contacteur, chargée en uranium(VI), est dirigée, non pas vers la zone "*barrage plutonium*" qui, rendue inutile par le procédé selon l'invention, peut être supprimée, mais directement vers la zone "*désextraction uranium*" au niveau de laquelle l'uranium (VI) va être désextrait comme il l'est habituellement dans le premier cycle de purification du procédé PUREX illustré sur la figure 3.

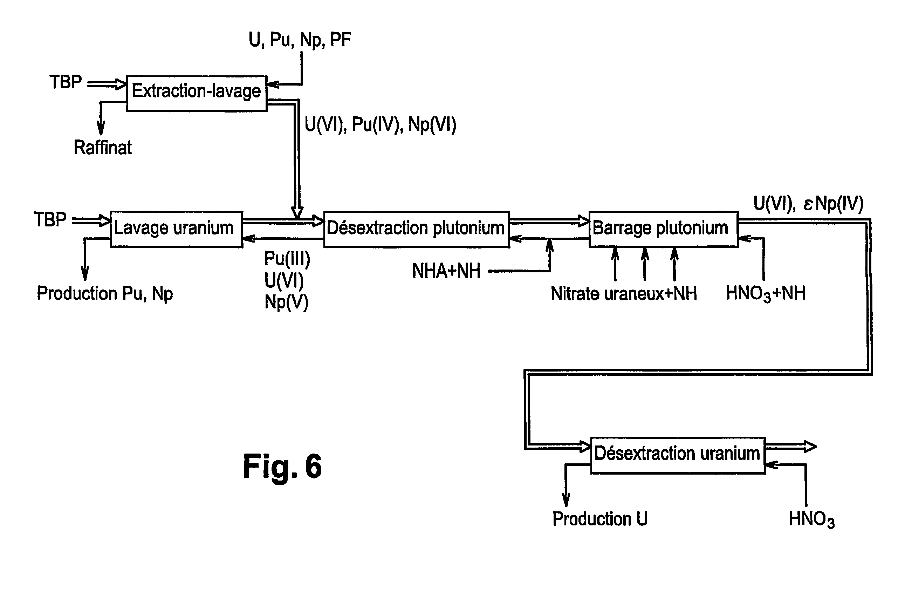

On se réfère à présent à la figure 6 qui représente schématiquement une variante du premier cycle de purification du procédé PUREX illustré sur la figure 3, dans laquelle le neptunium est récupéré conjointement avec le plutonium.

Dans cette variante, la désextraction sélective du plutonium est réalisée avec un réducteur moins énergique que le nitrate uraneux, par exemple du nitrate d'hydroxylamine (NHA), qui réduit le neptunium (VI) en neptunium(V), quasiment inextractible par la phase solvant utilisée dans le procédé PUREX.

La phase solvant chargée en uranium sort donc de la zone "*désextraction plutonium*" en ne contenant plus le neptunium et le plutonium qu'à l'état de traces.

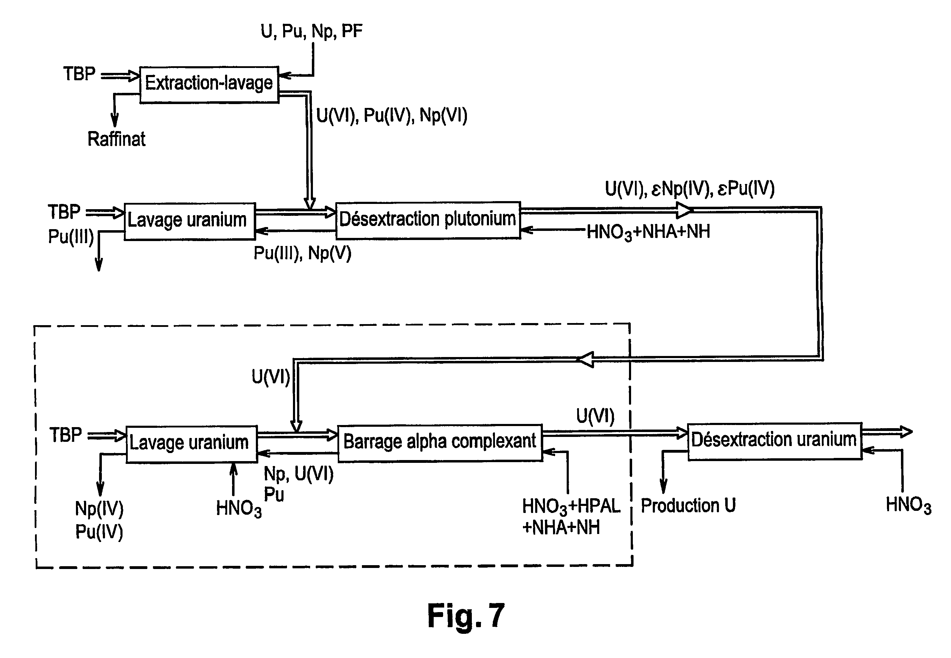

Toutefois, comme le montre la figure 7, le procédé selon l'invention peut être utilisé dans cette variante juste après la zone "*désextraction plutonium*" comme barrière de sécurité supplémentaire permettant de décontaminer l'uranium présent dans la phase solvant sortant de cette zone en neptunium et en plutonium pour le cas où ces derniers auraient été incomplètement désextraits dans la zone *"désextraction plutonium".*

Dans ce cas, la phase solvant sortant de la zone *"désextraction plutonium"* ne contenant pas d'excès d'uranium(IV), le procédé selon l'invention peut être mis en oeuvre sans étape d'oxydation préalable.

Par ailleurs, le neptunium et le plutonium se trouvant normalement à l'état d'oxydation (IV) dans cette phase, il est possible de le mettre en oeuvre selon un schéma analogue à celui représenté sur la figure 1, c'est-à-dire sans ajouter d'agent réducteur, ni d'agent anti-nitreux à la solution aqueuse acide utilisée dans le premier contacteur "*barrage alpha complexant*".

Cependant, comme illustré par la figure 7, une option intéressante consiste à appliquer le schéma de la figure 2 et à utiliser une solution aqueuse acide contenant, outre un hétéropolyanion lacunaire, du nitrate d'hydroxylamine et de l'hydrazine, à une température de l'ordre de 45°C, pour pallier un éventuel dysfonctionnement de l'opération "*désextraction plutonium*" susceptible de s'être traduit par une réduction incomplète (ou une ré-oxydation) du neptunium et du plutonium.

La phase aqueuse sortant du deuxième contacteur ("*lavage uranium*"), qui est éventuellement chargée en neptunium et/ou en plutonium complexés par l'HPAL, est éliminée du cycle et envoyée vers une unité de vitrification.

La phase organique sortant du deuxième contacteur, chargée en uranium(VI), est dirigée vers le premier contacteur, tandis que la phase organique sortant du premier contacteur, chargée en uranium(VI), est dirigée, non pas vers la zone *"barrage plutonium"* qui, rendue inutile par le procédé selon l'invention, peut être supprimée, mais directement vers la zone *"désextraction uranium"* au niveau de laquelle l'uranium(VI) va être désextrait comme il l'est habituellement dans le premier cycle de purification du procédé PUREX illustré sur la figure 6.

Les exemples qui suivent correspondent à des expériences réalisées en laboratoire et ayant permis de valider le procédé selon l'invention.

### Exemple 1 : Séparation de l'uranium(VI) du plutonium (IV) en tubes à essai

Dans cette expérience, la phase organique renfermant l'uranium(VI) et le plutonium(IV) devant être séparés est une solution de tributyle phosphate à 30% en volume dans du tétrapropylène hydrogéné qui contient de l'uranium(VI) à une concentration de 80 g/L, du plutonium(IV) à une concentration proche de 50 mg/L et de l'acide dibutyle phosphorique à une concentration de 100 mg/L. Ce dernier est un produit de dégradation du tributyle phosphate, qui est un fort complexant du plutonium(IV) et est donc susceptible de gêner la désextraction du plutonium(IV) de la phase organique.

Les solutions aqueuses acides utilisées pour désextraire le plutonium(IV) de la phase organique sont des solutions à 1 mole/L et 0,2 mole/L d'acide nitrique qui contiennent un silicotungstate sous forme de sel de potassium à une concentration correspondant à un rapport molaire entre ce silicotungstate et le plutonium présent dans la phase organique compris entre 2 et 3 pour un rapport volumique phase organique/solution aqueuse de 10.

La phase organique et la solution aqueuse acide sont introduites dans des tubes à essai dans un rapport volumique phase organique/solution aqueuse de 10. Elles sont alors mélangées pendant 3, 5, 10 ou 30 minutes en plaçant les tubes à essai sur un appareil permettant une agitation vibrante de ce tube. Puis, les tubes sont soumis à une centrifugation et le plutonium est dosé par des techniques radiométriques dans les phases organique et aqueuse ainsi séparées.

Le tableau 1 ci-après présente les facteurs de décontamination de la phase organique en plutonium (FD_{Pu}) obtenus en fonction de l'acidité initiale de la solution aqueuse utilisée et du temps de mélange de la phase organique et de cette solution. Ces facteurs de décontamination correspondent aux rapports entre les concentrations du plutonium détectées dans la phase organique avant et après mélange avec la solution aqueuse acide.

**TABLEAU 1**

| [HNO₃] (mole/L) | FD_{Pu} | | | |
|---|---|---|---|---|
| | Temps de mélange (min) | | | |
| | 3 | 5 | 10 | 30 |
| 1 | 36 | 55 | 114 | 248 |
| 0,2 | 48 | 65 | 100 | 216 |

Ainsi, il apparaît que moins de 1% du plutonium(IV) initialement présent dans la phase organique subsiste dans cette phase lorsqu'elle est mélangée au moins 10 minutes avec une solution aqueuse nitrique 1M contenant un silicotungstate.

### Exemple 2 : Séparation de l'uranium (VI) du neptunium (VI) en tubes à essai

Dans cette expérience, la phase organique renfermant l'uranium(VI) et le neptunium(VI) devant être séparés est une solution de tributyle phosphate à 30% en volume dans du tétrapropylène hydrogéné, qui contient 80 g/L d'uranium(VI) et environ 50 mg/L de neptunium(VI) et que l'on prépare juste avant l'expérience en mélangeant :
* une solution à 80 g/L d'uranium (VI) et à 0,02 mole/L d'acide nitrique, et
* une solution à 10 g/L de neptunium(VI) et à 0,05 mole/L d'acide nitrique, cette dernière ayant été obtenue en mettant en contact une phase organique avec une phase aqueuse nitrique (4M) contenant du ²³⁷Np préalablement oxydé en ²³⁷Np (VI) par de l'AgO, et ayant été enrichie en ²³⁹Np destiné à servir de traceur radioactif pour le dosage du neptunium.

Parallèlement, on prépare une série de solutions aqueuses acides présentant :
- une concentration en acide nitrique de 2 ou 3 moles/L,
- une concentration en nitrate d'hydroxylamine de 0,05, 0,1 ou 0,2 mole/L,
- une concentration en hydrazine de 0,05 ou 0,1 mole/L, et
- une concentration en silicotungstate correspondant à un rapport molaire entre ce silicotungstate et le neptunium présent dans la phase organique de 2 pour un rapport volumique phase organique/solution aqueuse de 10.

La phase organique est introduite dans des tubes à essai conjointement avec l'une des solutions aqueuses acides dans un rapport volumique phase organique/solution aqueuse de 10. Elles sont alors mélangées à une température de 45 ° C pendant 1, 3 ou 5 minutes. Puis, les tubes sont soumis à une centrifugation.

Un comptage et une spectrométrie α sont effectuées sur les phases organique et aqueuse ainsi séparées pour mesurer leur concentration en ²³⁷Np, tandis qu'une spectrométrie γ est effectuée sur ces mêmes phases pour mesurer leur concentration en ²³⁹Np.

Le tableau 2 ci-après présente les facteurs de décontamination de la phase organique en neptunium (FD_{Np}) obtenus en fonction de l'acidité initiale de la solution aqueuse utilisée, de sa concentration en nitrate d'hydroxylamine (NHA) et en hydrazine (NH), et du temps de mélange de la phase organique et de la solution aqueuse. Ces facteurs de décontamination correspondent aux rapports entre les concentrations du neptunium détectées dans la phase organique avant et après mélange avec la solution aqueuse acide.

**TABLEAU 2**

| Solution aqueuse acide | | | FD_{Np} | | |
|---|---|---|---|---|---|
| [HNO₃] (moles/L) | [NHA] (mole/L) | [NH] (mole/L) | Temps de mélange (min) | | |
| | | | 1 | 3 | 5 |
| 2 | 0,05 | 0,05 | | >5 | >7 |
| 2 | 0,1 | 0,1 | | 28 | 58 |
| 2 | 0,2 | 0,1 | | 36 | 66 |
| 3 | 0,2 | 0,1 | 14 | | |

Ces résultats mettent en évidence les bonnes performances du procédé selon l'invention même avec des temps de contact relativement faibles entre la phase organique et la solution aqueuse acide.

### Exemple 3 : Séparation de l'uranium(VI) du neptunium (VI) en extracteurs centrifuges de laboratoire

Trois essais de séparation de l'uranium(VI) du neptunium(VI) présents dans une même phase organique sont également menés en extracteurs centrifuges de laboratoire.

Le tableau 3 ci-après présente les conditions opératoires utilisées dans ces trois essais et les facteurs de décontamination de la phase organique en neptunium (FD_{NP}) obtenus.

Dans ce tableau :
- la colonne "[U]" indique la concentration initiale, exprimée en g/L, en uranium(VI) de la phase organique utilisée,
- la colonne "[Np]" indique la concentration initiale, exprimée en mg/L, en neptunium(VI) de la phase organique utilisée,
- la colonne "SiWo/Np" indique le rapport molaire entre le silicotungstate présent dans la solution aqueuse acide utilisée et le neptunium présent dans la phase organique utilisée,
- la colonne "O/A" indique le rapport volumique entre la phase organique utilisée et la solution aqueuse acide utilisée,
- la colonne "θ" indique la température, exprimée en °C, de mélange de la phase organique et de la solution aqueuse acide utilisées,
- la colonne "Temps de mélange" indique la durée, exprimée en secondes, du mélange de la phase organique et de la solution aqueuse acide utilisées,
- la colonne "[HNO₃]" indique l'acidité initiale, exprimée en moles/L, de la solution aqueuse acide utilisée,
- la colonne "[NHA]" indique la concentration, exprimée en mole/L, en nitrate d'hydroxylamine de la solution aqueuse acide utilisée,
- la colonne "[NH]" indique la concentration, exprimée en mole/L, en hydrazine de la solution aqueuse acide utilisée, tandis que
- la colonne "FD_{Np}" indique le facteur de décontamination de la phase organique en neptunium obtenu.

**TABLEAU 3**

| N° d'essai | [U] (g/L) | [Np] (mg/L) | SiWO/Np | O/A | θ (°C) | Temps de mélange (sec) | [HNO₃] (moles/L) | [NHA] (mole/L) | [NH] (mole/L) | FD_{Np} |
|---|---|---|---|---|---|---|---|---|---|---|
| 1 | 81 | 76 | 3,7 | 7,5 | 60 | 106 | 2 | 0,1 | 0,2 | >18 |
| 2 | 80,3 | 84,4 | 3,7 | 7,5 | 50 | 106 | 2 | 0,1 | 0,2 | >16 |
| 3 | 79 | 90 | 1,8 | 7,5 | 50 | 106 | 2 | 0,1 | 0,2 | >16 |

Les résultats de ces essais confirment les bonnes performances du procédé selon l'invention dans des appareils de laboratoire qui sont plus proches des appareils utilisés à une échelle industrielle que ne le sont les tubes à essai.

Dans la mesure où ils sont obtenus pour des temps de mélange entre la phase organique et la solution aqueuse acide comparables à ceux utilisés dans des contacteurs industriels, ils permettent d'envisager l'obtention de performances très élevées de décontamination dans le cas d'une mise en oeuvre du procédé selon l'invention pour le traitement en continu d'une phase organique dans des contacteurs multi-étagés et autoriser, dans le cadre d'une intégration du procédé selon l'invention dans le premier cycle de purification du procédé PUREX, une suppression du deuxième cycle de purification de l'uranium.

### DOCUMENTS CITES

[1] FR-A-2 731 717

## Revendications

1. Procédé de séparation de l'uranium(VI) d'un ou plusieurs actinides choisis parmi les actinides(IV) et les actinides(VI) autres que l'uranium(VI), **caractérisé en ce qu'**il comprend les étapes suivantes :
a) mettre en contact une phase organique, non miscible à l'eau et contenant ledit uranium et ledit ou lesdits actinides, avec une solution aqueuse acide contenant au moins hétéropolyanion lacunaire et, si ledit actinide ou l'un au moins desdits actinides est un actinide(VI), un agent réducteur capable de réduire sélectivement cet actinide(VI) ; et
b) séparer ladite phase organique de ladite solution aqueuse.

2. Procédé selon la revendication 1, **caractérisé en ce que** le ou les hétéropolyanions lacunaires sont choisis parmi les hétérotungstates de formule P₂W₁₇O₆₁¹⁰⁻, As₂W₁₇O₆₁¹⁰⁻, SiW₁₁O₃₉⁸⁻, GeW₁₁O₃₉⁸⁻ et PW₁₁O₃₉⁷⁻.

3. Procédé selon la revendication 2, **caractérisé en ce que** le ou les hétérotungstates lacunaires sont utilisés sous la forme de sels de métaux alcalins.

4. Procédé selon l'une quelconque des revendications précédentes, **caractérisé en ce que** la solution aqueuse acide contient du silicotungstate de formule SiW₁₁O₃₉⁸⁻, de préférence sous forme d'un sel de potassium.

5. Procédé selon l'une quelconque des revendications précédentes, **caractérisé en ce que**, après mise en contact de la phase organique et de la solution acide, le rapport molaire entre le ou les hétéropolyanions lacunaires et le ou les actinides devant être séparés de l'uranium(VI) est de 2 à 10 et, de préférence, de 2 à 5.

6. Procédé selon l'une quelconque des revendications précédentes, **caractérisé en ce que** le rapport entre les volumes de la phase organique et de la solution aqueuse acide est de 5 à 10.

7. Procédé selon l'une quelconque des revendications précédentes, **caractérisé en ce que** la solution aqueuse acide est une solution d'acide nitrique.

8. Procédé selon la revendication 7, **caractérisé en ce que** la solution d'acide nitrique a une concentration en HNO₃ comprise entre 0,5 et 3 moles/L.

9. Procédé selon l'une quelconque des revendications précédentes, **caractérisé en ce que** l'agent réducteur est choisi parmi le nitrate uraneux et le nitrate d'hydroxylamine.

10. Procédé selon l'une quelconque des revendications précédentes, **caractérisé en ce que** la solution aqueuse acide contient de plus un agent anti-nitreux, de préférence de l'hydrazine.

11. Procédé selon l'une quelconque des revendications précédentes, **caractérisé en ce que** l'étape a) est réalisée à une température de 45 à 60°C.

12. Procédé selon l'une quelconque des revendications précédentes, **caractérisé en ce qu'**il comprend, de plus, une opération consistant à mettre en contact la solution aqueuse obtenue à l'issue de l'étape b) avec une phase organique présentant une affinité vis-à-vis de l'uranium(VI), puis à séparer la dite solution aqueuse de ladite phase organique.

13. Procédé selon l'une quelconque des revendications précédentes, **caractérisé en ce que** le ou les actinides devant être séparés de l'uranium sont choisis parmi le thorium(IV), l'uranium(IV), le plutonium (IV), le plutonium(VI) et le neptunium(VI).

14. Utilisation d'un procédé selon l'une quelconque des revendications 1 à 13 dans le cadre d'un procédé de retraitement de combustibles nucléaires irradiés.

15. Utilisation d'un procédé selon l'une quelconque des revendications 1 à 13 dans le cadre du premier cycle de purification du procédé PUREX.

16. Utilisation selon la revendication 15, dans laquelle, ledit premier cycle de purification étant un cycle avec récupération conjointe de l'uranium et du neptunium, le procédé est utilisé juste après l'opération "*barrage plutonium*" pour décontaminer l'uranium présent dans la phase solvant issue de cette opération en neptunium.

17. Utilisation selon la revendication 15, dans laquelle, ledit premier cycle de purification étant un cycle avec récupération conjointe de l'uranium et du neptunium, le procédé est utilisé juste après l'opération "*désextraction plutonium*" pour décontaminer l'uranium présent dans la phase solvant issue de cette opération en neptunium et, éventuellement, en plutonium.

18. Utilisation selon la revendication 16 ou la revendication 17, dans laquelle la phase solvant est soumise à une opération d'oxydation pour oxyder l'excès d'uranium(IV) qu'elle renferme en uranium(VI) avant d'être soumise à l'étape a) du procédé.

19. Utilisation selon la revendication 18, dans laquelle l'étape a) du procédé est mise en oeuvre en utilisant une solution aqueuse nitrique de molarité allant de 2 à 3 et contenant au moins un hétéropolyanion lacunaire, du nitrate d'hydroxylamine et de l'hydrazine, à une température de l'ordre de 45°C.

20. Utilisation selon la revendication 15, dans laquelle, ledit premier cycle de purification étant un cycle avec récupération conjointe du plutonium et du neptunium, le procédé est utilisé juste après l'opération "*désextraction plutonium*" pour décontaminer l'uranium présent dans la phase solvant issue de cette opération en neptunium et/ou en plutonium.

21. Utilisation selon la revendication 20, dans laquelle l'étape a) du procédé est mise en oeuvre en utilisant une solution aqueuse nitrique de molarité proche de 1 et contenant au moins un hétéropolyanion lacunaire, à température ambiante.

22. Utilisation selon la revendication 20, dans laquelle l'étape a) du procédé est mise en oeuvre en utilisant une solution aqueuse nitrique de molarité allant de 2 à 3 et contenant au moins un hétéropolyanion lacunaire, du nitrate d'hydroxylamine et de l'hydrazine, à une température de l'ordre de 45°C.

## Claims

1. Method for separating uranium(VI) from one or more actinides selected from actinides(IV) and actinides(VI) other than uranium(VI), **characterized in that** it comprises the following steps:
a) bringing an organic phase, which is immiscible with water and contains said uranium and said actinide or actinides, in contact with an aqueous acidic solution containing at least one lacunary heteropolyanion and, if said actinide or at least one of said actinides is an actinide(VI), a reducing agent capable of selectively reducing this actinide(VI); and
b) separating said organic phase from said aqueous solution.

2. Method according to Claim 1, **characterized in that** the lacunary heteropolyanion or heteropolyanions are selected from heterotungstates of formula P₂W₁₇O₆₁¹⁰⁻, As₂W₁₇O₆₁¹⁰⁻ , SiW₁₁O₃₉⁸⁻, GeW₁₁O₃₉⁸⁻ and PW₁₁O₃₉⁷⁻.

3. Method according to Claim 2, **characterized in that** the lacunary heterotungstate or heterotungstates are used in the form of alkali metal salts.

4. Method according to any one of the preceding claims, **characterized in that** the aqueous acidic solution contains silicotungstate of formule SiW₁₁O₃₉⁸⁻, preferably in the form of a potassium salt.

5. Method according to any one of the preceding claims, **characterized in that**, after the organic phase and the acidic solution are brought in contact, the molar ratio between the lacunary heteropolyanion or heteropolyanions and the actinide or actinides to be separated from the uranium(VI) is from 2 to 10, and preferably from 2 to 5.

6. Method according to any one of the preceding claims, **characterized in that**, the ratio between the volumes of the organic phase and the aqueous acidic solution is from 5 to 10.

7. Method according to any one of the preceding claims, **characterized in that** the aqueous acidic solution is a nitric acid solution.

8. Method according to Claim 7, **characterized in that** the nitric acid solution has an HNO₃ concentration of between 0.5 and 3 moles/l.

9. Method according to any one of the preceding claims, **characterized in that** the reducing agent is selected from uranous nitrate and hydroxylamine nitrate.

10. Method according to any one of the preceding claims, **characterized in that** the aqueous acidic solution also contains an anti-nitrous agent, preferably hydrazine.

11. Method according to any one of the preceding claims, **characterized in that** step a) is carried out at a temperature of from 45 to 60°C.

12. Method according to any one of the preceding claims, **characterized in that** it also comprises an operation which consists in bringing the aqueous solution obtained after step b) in contact with an organic phase which has an affinity vis-à-vis uranium(VT), then in separating said aqueous solution from said organic phase.

13. Method according to any one of the preceding claims, **characterized in that** the actinide or actinides to be separated from the uranium are selected from thorium(IV), uranium(IV), plutonium(IV), plutonium(VI) and neptunium(VI).

14. Use of a method according to any one of Claims 1 to 13 in the scope of a method for reprocessing irradiated nuclear fuels.

15. Use of a method according to any one of Claims 1 to 13 in the scope of the first purification cycle of the PUREX method.

16. Use according to Claim 15, in which, said first purification cycle being a cycle with joint recovery of uranium and neptunium, the method is used just after the "*plutonium, barrier*" operation in order to decontaminate the uranium, present in the solvent phase obtained after this operation, with respect to neptunium.

17. Use according to Claim 15, in which, said first purification cycle being a cycle with joint recovery of uranium and neptunium, the method is used just after the "*plutonium back-extraction*" operation in order to decontaminate the uranium, present in the solvent phase obtained after this operation, with respect to neptunium and optionally with respect to plutonium.

18. Use according to Claim 16 or Claim 17, wherein the solvent phase is subjected to an oxidation operation in order to oxidize the excess uranium (IV), which it contains, into uranium(VI) before being subjected to step a) of the method.

19. Use according to Claim 18, wherein step a) of the method is carried out by using an aqueous nitric solution which has a molarity ranging from 2 to 3 and contains at least one lacunary heteropolyanion, hydroxylamine nitrate and hydrazine, at a temperature of the order of 45°C.

20. Use according to Claim 15, in which, said first purification cycle being a cycle with joint recovery of plutonium and neptunium, the method is used just after the "*plutonium back-extraction*" operation in order to decontaminate the uranium, present in the solvent phase obtained after this operation, with respect to neptunium and/or plutonium.

21. Use according to Claim 20, wherein step a) of the method is carried out by using an aqueous nitric solution which has a molarity close to 1 and contains at least one lacunary heteropolyanion, at ambient temperature.

22. Use according to Claim 20, wherein step a) of the method is carried out by using an aqueous nitric solution which has a molarity ranging from 2 to 3 and contains at least one lacunary heteropolyanion, hydroxylamine nitrate and hydrazine, at a temperature of the order of 45°C.

## Patentansprüche

1. Verfahren zum Trennen von Uran(VI) von einem oder mehreren Actinoiden, ausgewählt aus den Actinoiden(IV) und den Actinoiden(VI), welche nicht Uran(VI) sind, **dadurch gekennzeichnet, dass** es die folgenden Schritte umfasst:
a) Inkontaktbringen einer organischen Phase, die nicht mit Wasser mischbar ist und die das Uran und das oder die Actircoid(e) enthält, mit einer wässrigen sauren Lösung, die mindestens ein lakunares Heteropolyanion enthält und, wenn das Actinoid oder mindestens eines der Actinoide ein Actinoid(VI) ist, einem Reduktionsmittel, das das Actinoid(VI) selektiv reduzieren kann; und
b) Trennen der organischen Phase von der wässrigen Lösung.

2. Verfahren gemäß Anspruch 1, **dadurch gekennzeichnet, dass** das oder die lakunare(n) Heteropolyanion(en) aus den Heterowolframaten der Formel P₂W₁₇O₆₁¹⁰⁻, As₂W₁₇O₆₁¹⁰⁻, SiW₁₁O₃₉⁸⁻, GeW₁₁O₃₉⁸⁻ und PW₁₁O₃₉⁷⁻ ausgewählt ist/sind.

3. Verfahren gemäß Anspruch 2, **dadurch gekennzeichnet, dass** das oder die lakunare(n) Heterowolframat(e) in Form von Alkalimetallsalzen verwendet wird/werden.

4. Verfahren gemäß einem der vorhergehenden Ansprüche, **dadurch gekennzeichnet, dass** die wässrige saure Lösung Silicowolframat der Formel SiW₁₁O₃₉⁸⁻, bevorzugt in Form eines Kaliumsalzes, enthält.

5. Verfahren gemäß einem der vorhergehenden Ansprüche, **dadurch gekennzeichnet, dass** nach dem Inkontaktbringen der organischen Phase und der sauren Lösung das Molverhältnis zwischen dem oder den lakunaren Heteropolyanion(en) und dem oder den Actinoid(en), die von dem Uran(VI) abgetrennt werden sollen, von 2 bis 10 ist, bevorzugt von 2 bis 5.

6. Verfahren gemäß einem der vorhergehenden Anspruche, dadurch gekenntzeichnet, dass das Verhältnis zwischen den Volumina der organischen Phase und der wässrigen sauren Lösung von 5 bis 10 ist.

7. Verfahren gemäß einem der vorhergehenden Ansprüche, **dadurch gekennzeichnet, dass** die wässrige saure Lösung eine Salpetersäurelösung ist.

8. Verfahren gemäß Anspruch 7, **dadurch gekennzeichnet, dass** die Salpetersäurelösung eine Konzentration an HNO₃ zwischen 0,5 und 3 Mol/l aufweist.

9. Verfahren gemäß einem der vorhergehenden Ansprüche, **dadurch gekennzeichnet, dass** das Reduktionsmittel aus Urannirat und Hydroxylaminnürat ausgewählt ist.

10. Verfahren gemäß einem der vorhergehenden Ansprüche, **dadurch gekennzeichnet, dass** die wässrige saure Lösung außerdem ein Anti-Salpeter-Mittel, bevorzugt Hydrazin, enthält.

11. Verfahren gemäß einem der vorhergehenden Ansprüche, dadurch gekenntzeichnet, dass Schritt a) bei einer Temperatur von 45 bis 60°C durchgeführt wird.

12. Verfahren gemäß einem der vorhergehenden Ansprüche, **dadurch gekennzeichnet, dass** es außerdem einen Arbeitsschritt, betstehend aus Inkontaktbringen der aus Schritt b) erhaltenen wässrigen Lösung mit einer organischen Phase, die eine Affinität gegenüber Uran(V1) aufweist, dann Trennen der wässrigen Lösung von der organischen Phase, umfasst.

13. Verfahren gemäß einem der vorhergehenden Ansprüche, **dadurch gekennzeichnet, dass** das oder die Actinoid(e), das/die von dem Uran abgetrennt werden soll(en), aus Thorium(IV), Uran(IV), Plutonium(IV), Plutonium(VI) und Neptunium(VI) ausgewählt ist/sind.

14. Verwendung eines Verfahrens gemäß einem der Ansprüche 1 bis 13 in einem Verfahren der Wiederaufbereitung bestrahlter nuklearer Brennstoffe.

15. Verwendung eines Verfahrens gemäß einem der Ansprüche 1 bis 13 in dem ersten Reinigungszyklus des PUREX-Verfahrens.

16. Verwendung gemäß Anspruch 15, wobei, weil der erste Reinigungszyklus ein Zyklus mit gemeinsamer Rückgewinnung von Uran und Neptunium ist, das Verfahren direkt nach dem Arbeitsschritt "Plutonium-Sperre" verwendet wird, um das Uran zu dekontaminieren, das in der Lösungsmittelphase vorhanden ist, die aus dem Neptunium-Arbeitsschritt stammt.

17. Verwendung gemäß Anspruch 15, wobei, weil der erste Reinigungszyklus ein Zyklus mit gemeinsamer Rückgewinnung von Uran und Neptunium ist, das Verfahren direkt nach dem Arbeitsschritt "Plutonium-Herausextraktion" verwendet wird, um das Uran zu dekontaminieren, das in der Lösungsmittelphase vorhanden ist, die aus dem Neptunium-und gegebenenfalls Plutonium-Arbeitsschritt stammt.

18. Verwendung gemäß Anspruch 16 oder Anspruch 17, wobei die Lösungsmittelphase einem Oxidations-Arbeitsschritt unterzogen wird, um den Überschuss an Uran(IV), den sie enthält, zu Uran (VI) zu oxidieren, bevor sie Schritt a) des Verfahrens unterzogen wird.

19. Verwendung gemäß Anspruch 18, wobei Schritt a) des Verfahrens durchgeführt wird, indem eine wässrige Nitratlösung, die eine Molarität von 2 bis 3 aufweist und die mindestens ein lakunares Heteropolyanion, Hydroxylaminnitrat und das Hydrazin enthält, bei einer Temperatur in der Größenordnung von 45°C verwendet wird.

20. Verwendung gemäß Anspruch 15, wobei, weil der erste Reinigungszyklus ein Zyklus mit gemeinsamer Rückgewinnung von Plutonium und Neptunium ist, das Verfahren direkt nach dem Arbeitsschritt "Plutanium-Herausextraktion" verwendet wird, um das Uran zu dekontaminieren, das in der Lösungsmittelphase vorhanden ist, die aus dem Neptunium- und/oder Plutonium-Arbeitsschritt stammt.

21. Verwendung gemäß Anspruch 20, wobei Schritt a) des Verfahrens durchgeführt wird, indem eine wässrige Nitratlösung, die eine Molarität nahe 1 aufweist und die mindestens ein lakunares Heteropolyanion enthält, bei Raumtemperatur verwendet wird.

22. Verwendung gemäß Anspruch 20, wobei Schritt a) des Verfahrens durchgeführt wird, indem eine wässrige Nitratlösung, die eine Molarität von 2 bis 3 aufweist und die mindestens ein lakunares Heteropolyanion, Hydroxylaminnitrat und das Hydrazin enthält, bei einer Temperatur in der Größenordnung von 45°C verwendet wird.
